# EUROPÄISCHE PATENTANMELDUNG

(11) **EP 1 916 270 A1**
(43) Veröffentlichungstag der Anmeldung: **30.04.2008**
(21) Anmeldenummer: 06122865.6
(22) Anmeldetag: 24.10.2006
(51) Int. Cl.: C08G 18/28, C09J 163/00

(54) **Hitzehärtende Epoxidharzzusammensetzung mit blockiertem Polyurethanprepolymer**

(71) Anmelder: Sika Technology AG, 6340 Baar (CH)
(72) Erfinder: Kramer, Andreas, 8006, Zürich (CH); Finter, Jürgen, 8037, Zürich (CH)
(74) Vertreter: Sika Patent Attorneys

(57) **Zusammenfassung**

Die vorliegende Erfindung betrifft hitzehärtende Epoxidharzzusammensetzungen, welche mindestens ein Epoxidharz **A** mit durchschnittlich mehr als einer Epoxidgruppe pro Molekül, mindestens einen Härter **B** für Epoxidharze, welcher durch erhöhte Temperatur aktiviert wird, und mindestens ein endständig blockiertes Polyurethanprepolymer der Formel (I) enthalten. Diese Epoxidharzzusammensetzungen eignen sich insbesondere als einkomponentige hitzehärtende Klebstoffe und zeichnen sich durch hohe mechanische Werte, hohe Glasübergangstemperaturen und hohe Schlagzähigkeiten aus.

## Beschreibung

### Technisches Gebiet

Die Erfindung betrifft das Gebiet der Schlagzähigkeitsmodifikatoren und das Gebiet der hitzehärtenden Epoxidharzzusammensetzungen.

### Stand der Technik

Schlagzähigkeitsmodifikatoren werden schon seit langem dazu eingesetzt, um die Festigkeit von Klebstoffen bei schlagartiger Krafteinwirkung zu verbessern. Insbesondere Epoxidharzzusammensetzungen weisen generell zwar hohe mechanische Festigkeiten auf, sind jedoch sehr spröde, das heisst, bei einer schlagartigen Krafteinwirkung, wie sie beispielsweise in einem Zusammenstoss von Fahrzeugen eintritt, bricht das gehärtete Epoxidharz und führt zu einer Zerstörung des Verbundes.
Flüssigkautschuke werden schon seit längerem zur Zähigkeitsmodifizierung eingesetzt. Beispielsweise werden Flüssigkautschuke auf Basis von Acrylnitril/Butadien-Copolymeren, wie sie beispielsweise unter dem Namen Hycar® erhältlich sind, eingesetzt.
EP-B-0 338 985 beschreibt schlagzähe Epoxidharzzusammensetzungen, welche neben Flüssigkautschuken auf Basis von Acrylnitril/Butadien-Copolymeren zusätzlich auch Flüssigkautschuke auf Basis von Polyurethanprepolymere aufweisen, welche mit einem Phenol oder einem Lactam terminiert sind.
WO-A-2005/007766 offenbart Epoxidharzzusammensetzungen, welche ein Reaktionsprodukt eines Isocyanatgruppen-terminierten Prepolymers und eines Blockierungsmittels, welches ausgewählt ist aus der Gruppe Bisphenol, Phenol, Benzylalkohol, Aminophenol oder Benzylamin enthalten. Derartige Epoxidharzzusammensetzungen zeigen jedoch Schwächen in der Tieftemperaturschlagzähigkeit (<0°C) auf.
WO-A-03/093387 offenbart schlagzähe Epoxidharzzusammensetzungen, welche Addukte von Dicarbonsäuren mit Glycidylethern oder von Bis(aminophenyl)sulfon-Isomeren oder aromatischen Alkoholen mit Glycidylethern enthalten. Diese Zusammensetzungen weisen jedoch ebenfalls Defizite in der Tieftemperaturschlagzähigkeit (<0°C) auf.
WO-A-2004/055092 und WO-A-2005/007720 offenbaren Epoxidharzzusammensetzungen mit verbesserter Schlagzähigkeit, welche ein Reaktionsprodukt eines Isocyanatgruppen-terminierten Polyurethanprepolymeren mit einem Monohydroxyepoxid enthalten. Diese Epoxidharzzusammensetzungen weisen zwar gegenüber denjenigen, welche Phenol-terminierte Polyurethanprepolymere enthalten, eine verbesserte Tieftemperaturschlagzähigkeit auf, sind aber immer noch nicht optimal.
US 4,701,512 offenbart Benzoxazolinon und Benzoxazindion als Blockierungsmittel für Isocyanate und deren Verwendung als blockierte Härter für Epoxidharze, allenfalls in Kombination mit Katalysatoren. Diese Zusammensetzung weisen jedoch keine zusätzlichen Härter für Epoxidharze auf und werden bei einer Temperatur von 180°C bis 200°C quasi vollständig über diese blockierten Isocyanate ausgehärtet. Derartige Zusammensetzungen weisen jedoch eine unzureichende Mechanik für Klebstoffe auf.

### Darstellung der Erfindung

Aufgabe der vorliegenden Erfindung ist es daher, hitzehärtende Epoxidharzzusammensetzungen zur Verfügung zu stellen, welche verbesserte Schlagzähigkeiten aufweisen, sowie hohe mechanische Eigenschaften aufweisen und insbesondere über eine hohe Glasübergangstemperatur verfügen.
Überraschenderweise wurde gefunden, dass diese Aufgabe durch eine Zusammensetzung gemäss Anspruch 1 erfüllt werden kann. Insbesondere überraschend wurde gefunden, dass vor allem die Tieftemperaturschlagzähigkeit gegenüber dem Stand der Technik zum Teil stark erhöht werden konnte.
Ein weiterer Aspekt der Erfindung stellt die Verwendung des endständig blockierten Polyurethanprepolymers der Formel (1), insbesondere der Formel (1'), als Mittel zur Verbesserung der Schlagzähigkeit, insbesondere von Epoxidharzzusammensetzungen, dar.
Weitere Aspekte sind die Verwendung der hitzehärtenden Epoxidharzzusammensetzungen als einkomponentigen hitzehärtenden Klebstoff, ein Verfahren zum Verkleben gemäss Anspruch 30 sowie die daraus resultierenden verklebten Artikel.
Besonders bevorzugte Ausführungsformen sind Gegenstand der Unteransprüche.

### Wege zur Ausführung der Erfindung

Die vorliegende Erfindung betrifft in einem ersten Aspekt eine hitzehärtende Epoxidharzzusammensetzung, welche mindestens ein Epoxidharz **A** mit durchschnittlich mehr als einer Epoxidgruppe pro Molekül, mindestens einen Härter **B** für Epoxidharze, welcher durch erhöhte Temperatur aktiviert wird, und mindestens ein endständig blockiertes Polyurethanprepolymer der Formel (I) enthält.

Die hitzehärtende Zusammensetzung enthält mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.
Bevorzugte Epoxid-Festharze weisen die Formel (X) auf

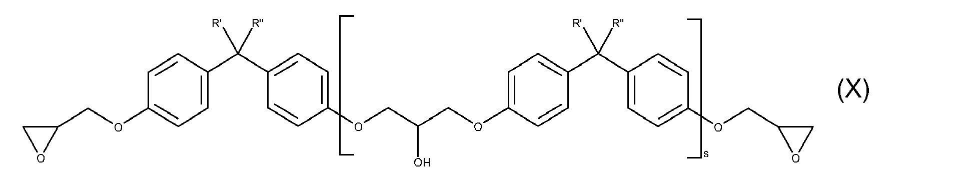

Hierbei stehen die Substituenten R' und R" unabhängig voneinander entweder für H oder CH₃. Weiterhin steht der Index s für einen Wert von > 1.5, insbesondere von 2 bis 12.
In diesem Dokument ist die Verwendung des Terms "unabhängig voneinander" in Zusammenhang mit Substituenten, Resten oder Gruppen dahin gehend auszulegen, dass in demselben Molekül die gleich bezeichneten Substituenten, Reste oder Gruppen gleichzeitig mit unterschiedlicher Bedeutung auftreten können.

Derartige Epoxid-Festharze sind kommerziell erhältlich beispielsweise von Dow oder Huntsman oder Hexion.
Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf 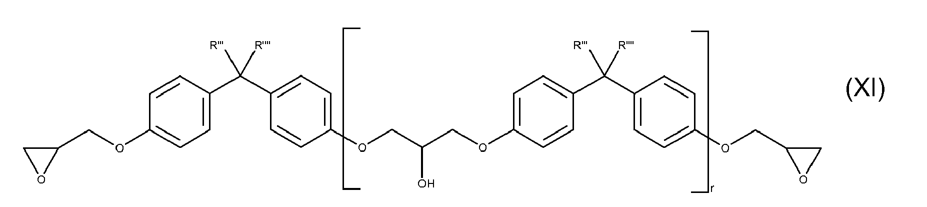 Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.
Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).
Der Anteil von Epoxidharzes **A** beträgt vorzugsweise 10 - 85 Gew.-%, insbesondere 15 - 70 Gew.-%, bevorzugt 15 - 60 Gew.-%, am Gewicht der Zusammensetzung.

Die erfindungsgemässe Zusammensetzung enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.
Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.
Besonders bevorzugt als Härter **B** ist Dicyandiamid.

Vorteilhaft beträgt der Gesamtanteil des Härters **B** 0.5 - 12 Gewichts- %, vorzugsweise 2 - 8 Gewichts-%, bezogen auf das Gewicht der gesamten Zusammensetzung.

Die erfindungsgemässe Zusammensetzung enthält weiterhin ein endständig blockiertes Polyurethanprepolymer der Formel (I). 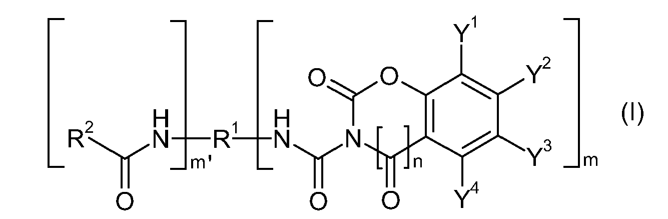 Hierbei steht R¹ für ein mit m + m' Isocyanatgruppen terminiertes lineareS oder verzweigtes Polyurethanprepolymer **PU1** nach dem Entfernen aller endständigen Isocyanatgruppen. Weiterhin stehen Y¹, Y², Y³ und Y⁴ unabhängig voneinander für H, Halogen, NO₂, Alkyl oder Alkoxy und m steht für einen Wert von 1 bis 8, m' steht für einen Wert von 0 bis 7 und n steht für 0 oder 1. Es gilt die Massgabe, dass m + m' für einen Wert von 2 bis 8 steht.
Weiterhin steht R² unabhängig voneinander für einen Substituenten, welcher ausgewählt ist aus der Gruppe bestehend aus 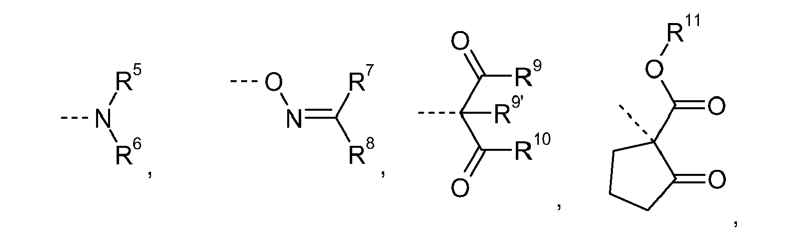 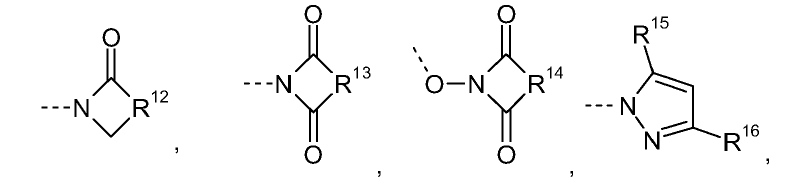 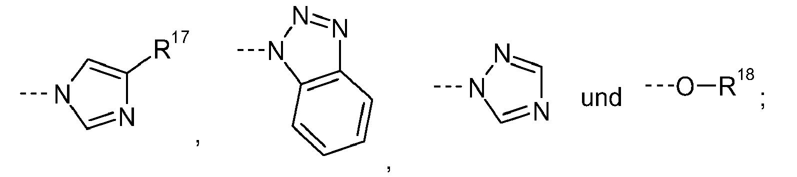 wobei
R⁵, R⁶, R⁷ und R⁸ je unabhängig voneinander für eine Alkyl- oder Cycloalkyl- oder Aryl- oder Aralkyl- oder Arylalkyl-Gruppe steht oder R⁵ zusammen mit R⁶ oder R⁷ zusammen mit R⁸, einen Teil eines 4- bis 7-gliedrigen Rings bilden, welcher allenfalls substituiert ist;
R⁹, R⁹' und R¹⁰ je unabhängig voneinander für eine Alkyl- oder Aralkyl-oder Aryl- oder Arylalkyl-Gruppe oder für eine Alkyloxy- oder Aryloxy-oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist; oder für einen Rest der Formel (V') steht 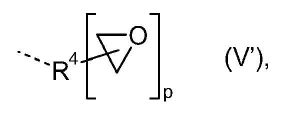 wobei R⁴ unabhängig voneinander für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht und p für einen Wert von 1, 2 oder 3 steht.

Die gestrichelten Linien in den Formeln dieses Dokumentes stellen jeweils die Bindung zwischen dem jeweiligen Substituenten und dem dazugehörigen Molekülrest dar.

Somit weist das endständig blockierte Polyurethanprepolymer der Formel (I) mindestens eine Gruppierung der Formel 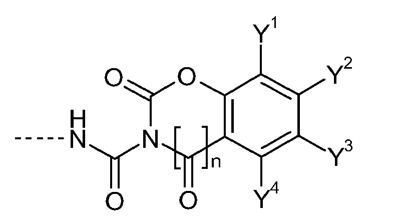 auf.
Somit stellt Formel (I) eine umfassende Formel der zwei Formeln (la) und (Ib) dar.

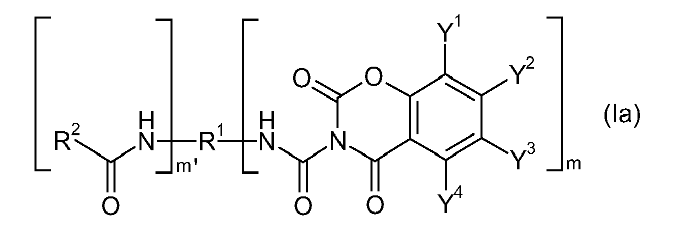

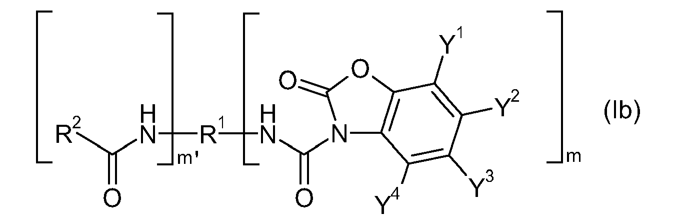

Falls Y¹, Y², Y³ und/oder Y⁴ für eine Alkylgruppe steht, ist diese insbesondere eine lineare oder verzweigte C₁-C₂₀-Alkylgruppe.
Falls Y¹ Y², Y³ und/oder Y⁴ für eine Alkoxygruppe steht, ist diese insbesondere eine lineare oder verzweigte C₁-C₂₀-Alkoxygruppe.
Bevorzugt sind von den Substituenten Y¹, Y², Y³ und Y⁴ mindestens zwei Substituenten H. Besonders bevorzugt sind Y¹= Y²= Y³=Y⁴=H.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.
Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R⁹' oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln 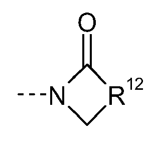 und ---O-R¹⁸. Als Substituent der Formel 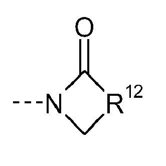 ist ε-Caprolactam nach Entfernung des NH-Protons bevorzugt.

Besonders bevorzugte Reste R² sind einerseits Reste, welche ausgewählt sind aus der Gruppe bestehend aus

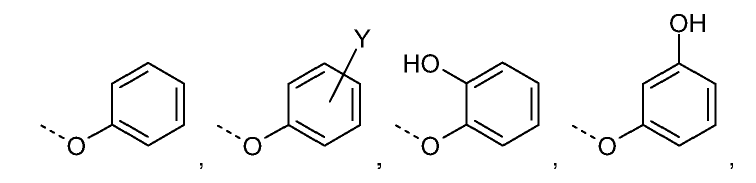

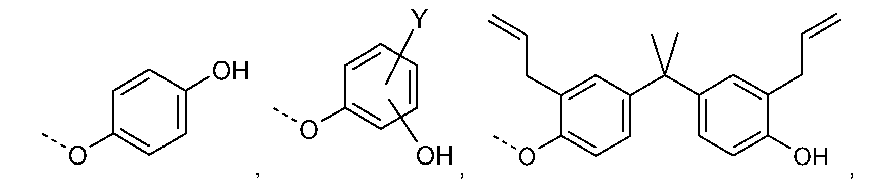

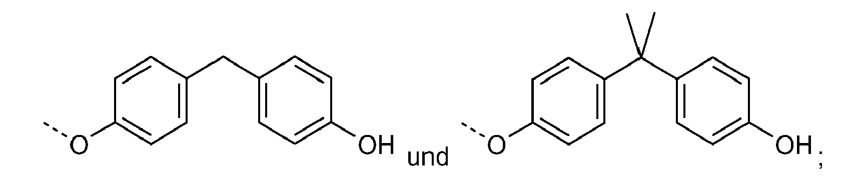

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C15-Alkylrest mit 1 bis 3 Doppelbindungen bevorzugt.

Besonders bevorzugte Reste R² sind anderseits Reste der Formel (V") 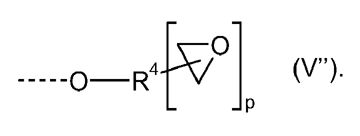 Hierbei ist als Rest R⁴ insbesondere ein dreiwertiger Rest der Formel 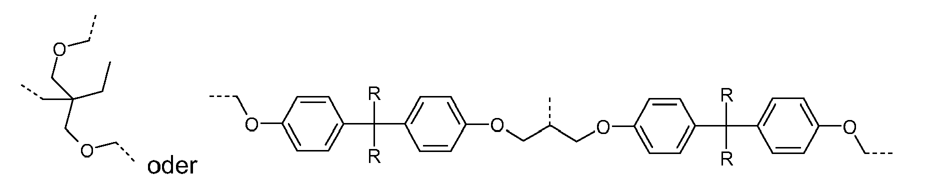 bevorzugt, wobei R für Methyl oder H steht.

Als R² sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-ÖI)), Nonylphenol, mit Styrol oder Dicyclopentadien umgesetzte Phenole, Bis-Phenol-A, Bis-Phenol-F und 2,2'-Diallyl-bisphenol-A.

Besonders bevorzugt ist m' gleich 0, d. h. das endständig blockierte Polyurethanprepolymer der Formel (I) weist vorzugsweise keine Substituenten R² auf. In einer besonderes bevorzugten Ausführungsform weist das endständig blockierte Polyurethanprepolymer der Formel (I) die Formel (I') auf.

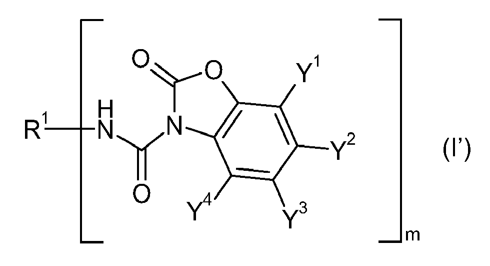

Die Herstellung des endständig blockierten Polyurethanprepolymers der Formel (I) erfolgt aus dem Isocyanatgruppen terminierten linearen oder verzweigten Polyurethanprepolymeren **PU1** mit mindestens einer Isocyanat-reaktiven Verbindung der Formel 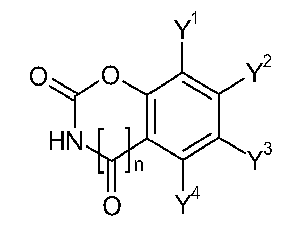 und allenfalls einer oder mehreren Isocyanat-reaktiven Verbindungen R²H.
Falls mehrere derartige Isocyanat-reaktive Verbindungen eingesetzt werden, kann die Reaktion sequentiell oder mit einer Mischung dieser Verbindungen erfolgen.
Die Umsetzung erfolgt derart, dass die eine oder die mehreren Isocyanat-reaktiven Verbindungen stöchiometrisch oder im stöchiometrischen Überschuss eingesetzt werden, um zu gewährleisten, dass alle NCO-Gruppen umgesetzt sind.

Falls R² die Formel (V") aufweist, ist die entsprechende Isocyanat-reaktive Verbindungen eine Monohydroxyl-Epoxidverbindung der Formel (V)

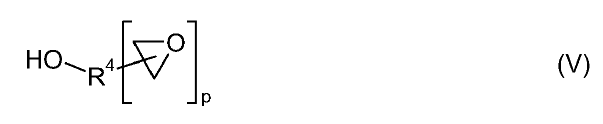

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.
Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.
Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

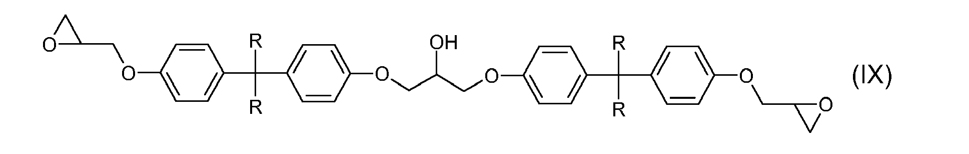

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.
Die freie primäre oder sekundäre OH-Funktionalität der Monohydroxyl-Epoxidverbindung der entsprechenden Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

Das endständig blockierte Polyurethanprepolymer der Formel (I) weist vorteilhaft einen elastischen Charakter auf und ist weiterhin vorteilhaft in Epoxid-Flüssigharzen löslich oder dispergierbar.

Die Menge des endständig blockierten Polyurethanprepolymers der Formel (I) beträgt vorteilhaft zwischen 1 und 45 Gewichts-%, insbesondere zwischen 3 und 35 Gewichts-%, bezogen auf das Gesamtgewicht der hitzehärtenden Epoxidharzzusammensetzung.
Das Verhältnis der Anzahl der Epoxidgruppen des Epoxidharzes **A** zur Anzahl blockierten Isocyanatgruppen des endständig blockierten Polyurethanprepolymer der Formel (1) beträgt mehr als 5, insbesondere 5 - 100 vorzugsweise 10 - 80. Derartige Zusammensetzungen reagieren primär über die Aushärtung mittels des Härters **B** aus. Das endständig blockierte Polyurethanprepolymers der Formel (I) trägt nur einen geringen Anteil zur Epoxidhärtung bei und wird in erster Linie als Schlagzähigkeitsmodifikator in der Zusammensetzung eingesetzt.

Das Polyurethanprepolymer **PU1,** auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** herstellen.

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.
Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.
Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere Q_{PM} di- oder höherfunktioneller Polyole mit OH-Equivalentsgewichten von 300 bis 6'000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.
Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hycar® ATBN von Nanoresins AG, Deutschland vertrieben werden, sowie weitere aminoterminierte synthetische Kautschuke oder Gemische der genannte Komponenten verwendet werden.
Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.
Am Beispiel eines Diisocyanates und eines Diols bildet sich daraus, wie im Folgenden gezeigt, je nach gewählter Stöchiometrie eine Spezies der Formel (VI) oder (VII) 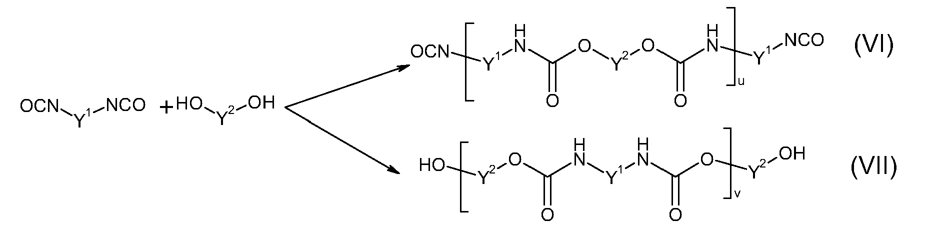 Die Reste Y¹ und Y² stellen einen divalenten organischen Rest dar und die Indizes u und v variieren je nach Stöchiometrieverhältnis von 1 bis typischerweise 5.
Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer **PU1** der folgenden Formel gebildet werden:

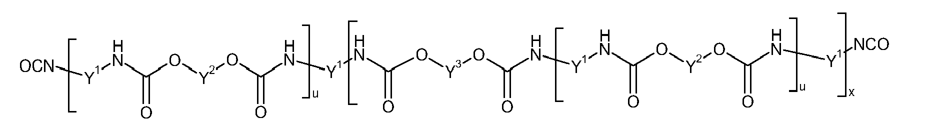

Aus der Spezies der Formel (VII) und einem Diisocyanat mit einem divalenten organischen Rest Y⁴ kann ein kettenverlängertes Polyurethanprepolymer **PU1** der folgenden Formel gebildet werden:

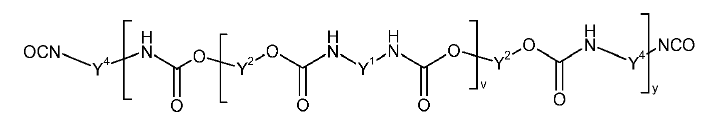

Die Indizes x und y variieren je nach Stöchiometrieverhältnis von 1 bis typischerweise 5, und sind insbesondere 1 oder 2.
Weiterhin kann auch die Spezies der Formel (VI) mit der Spezies der Formel (VII) umgesetzt werden, so dass ein NCO Gruppen aufweisendes kettenverlängertes Polyurethanprepolymer **PU1** entsteht.
Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.
Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polymeren der Formel (I) beziehungsweise die Applikation der Zusammensetzung erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.
Durch die Art und Stellung eines solchen Substituenten wird unter anderem die für die Bildung des Polyurethanprepolymeren **PU1** nötige Reaktion mit Isocyanaten beeinflusst.
Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylenebis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.
Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

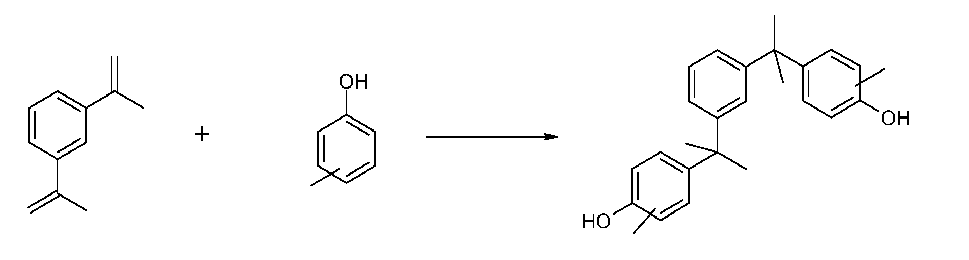

Besonders bevorzugt sind schwerflüchtige Bisphenole. Als meist bevorzugt gelten Bisphenol-M, Bisphenol-S und 2,2'-Diallyl-Bisphenol-A.
Bevorzugt weist das **Q_{PP}** 2 oder 3 phenolische Gruppen auf.
In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.
In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.
In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.
In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.
Im dritten Verfahren schliesslich, "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.
Die drei Verfahren führen zu Isocyanat-terminierten Polyurethanprepolymeren **PU1,** die sich bei gleicher Zusammensetzung in der Sequenz ihrer Bausteine unterscheiden können. Es sind alle drei Verfahren geeignet, jedoch ist das "2-Schrittverfahren II" bevorzugt.
Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM})** bevorzugt grösser als 1.20 ist.
Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM}**, das Polyphenol **Q_{PP}**, das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.
Das Polyurethanprepolymer **PU1** weist bevorzugt elastischen Charakter auf und zeigt eine Glasumwandlungstemperatur Tg von kleiner als 0°C.

Die hitzehärtende Epoxidharzzusammensetzung kann weiterhin ein Thixotropiermittel C auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.
Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer **PU2,** insbesondere erhalten durch Umsetzung eines trifunktionellen Polyetherpolyols mit IPDI und anschliessender Blockierung der endständigen Isocyanatgruppen mit ε-Caprolactam.
Vorteilhaft beträgt der Gesamtanteil des Thixotropiermittels C 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5/95-25 /75.

Die hitzehärtende Epoxidharzzusammensetzung enthält vorzugsweise weiterhin einen Flüssigkautschuk **D,** welcher vorzugsweise ein carboxyl- oder epoxidterminiertes Polymer ist.
In einer ersten Ausführungsform ist dieser Flüssigkautschuk **D** ein carboxyl- oder epoxidterminiertes Acrylnitril/Butadien-Copolymer oder ein Derivat davon. Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.
Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

In einer zweiten Ausführungsform ist dieser Flüssigkautschuk **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer dritten Ausführungsform ist der Flüssigkautschuk **D** ein Flüssigkautschuk der Formel (II). 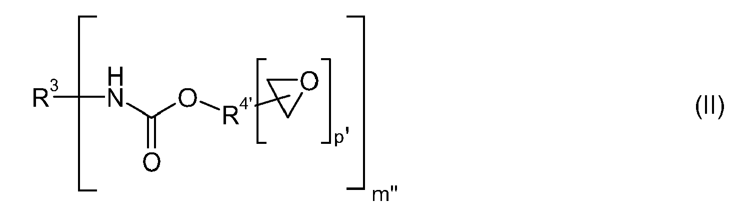 wobei R³ für ein mit m" Isocyanatgruppen terminiertes linearen oder verzweigtes Polyurethanprepolymer **PU1'** nach dem Entfernen aller endständigen Isocyanatgruppen steht,
R⁴' für einen Rest eines eine primäre oder sekundäre Hydroxylgruppe enthaltenden aliphatischen, cycloaliphatischen, aromatischen oder araliphatischen Epoxids nach dem Entfernen der Hydroxyl- und Epoxidgruppen, steht, p' für die Werte 1, 2 oder 3 und m" für einen Wert von 2 bis 8 steht.
Die Möglichkeiten und Details für die Herstellung des Isocyanatgruppen terminiertes linearen oder verzweigten Polyurethanprepolymers **PU1'** entsprechen denjenigen, wie sie bereits für das Isocyanatgruppen terminierte lineare oder verzweigte Polyurethanprepolymer **PU1** beschrieben wurden.
Die Möglichkeiten für R^{4'}, p' und m" entsprechen denjenigen von R⁴, p und m, wie sie für die Formel (I) resp. Formel (V) vorgängig bereits beschrieben wurden.

In einer bevorzugten Ausführungsform enthält die hitzehärtende Epoxidharzzusammensetzung mindestens einen epoxidfunktionellen Flüssigkautschuk auf Basis eines Acrylnitril/Butadien-Copolymers und mindestens einen epoxidfunktionellen Flüssigkautschuk der Formel (II).

Der Flüssigkautschuk **D** wird vorteilhaft in einer Menge von 1 - 45 Gew.-%, insbesondere 1 - 25 Gew.-%, bezogen auf das Gewicht der Zusammensetzung, eingesetzt.

Die hitzehärtende Epoxidharzzusammensetzung enthält vorzugsweise weiterhin einen festen Zähigkeitsverbesserer **E.** Unter einem "Zähigkeitsverbesserer" wird hierbei und im Folgenden ein Zusatz zu einer Epoxidharzmatrix verstanden, der bereits bei geringen Zuschlägen von 0.1 - 15 Gew.-%, insbesondere von 0.5 - 8 Gew.-%, eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.
Der feste Zähigkeitsverbesserer E ist in einer ersten Ausführungsform ein organisches lonen-getauschtes Schichtmineral **E1.**

Das lonen-getauschte Schichtmineral E1 kann entweder ein Kationen-getauschtes Schichtmineral **E1c** oder ein Anionen-getauschtes Schichtmineral **E1a** sein.
Das Kationen-getauschte Schichtmineral **E1c** wird hierbei erhalten aus einem Schichtmineral **E1',** bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **E1'** wie Kaolinit oder ein Montmorillionit oder ein Hectorit oder ein Illit gezeigt.
Zumindest ein Teil der Kationen des Schichtminerals **E1**' wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.
Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.

Das Anionen-getauschte Schichtmineral **E1a** wird hierbei erhalten aus einem Schichtmineral **E1"**, bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1",** bei dem zumindest ein Teil der Carbonat-Anionen der Zwischenschichten durch organische Anionen ausgetauscht wurden. Ein weiteres Beispiel sind funktionalisierte Alumoxane wie z. B. in US Patent 6 322890 beschrieben.
Es ist durchaus auch möglich, dass die Zusammensetzung gleichzeitig ein Kationen-getauschtes Schichtmineral **E1c** und ein Anionen-getauschtes Schichtmineral **E1a** enthält.

Der feste Zähigkeitsverbesserer ist in einer zweiten Ausführungsform ein Blockcopolymer **E2.** Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.
Besonders bevorzugte Blockcopolymere **E2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer **E** ist in einer dritten Ausführungsform ein Core-Shell Polymer **E3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.
Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.
Weitere vergleichbare Beispiele für Core-Shell-Polymere werden unter dem Namen Albidur™ von Nanoresins AG, Deutschland, angeboten.

Der feste Zähigkeitsverbesserer **E** ist in einer vierten Ausführungsform ein festes Umsetzungsprodukt **E4** eines carboxylierten festen Nitrilkautschuks mit überschüssigem Epoxidharz.

Als fester Zähigkeitsverbesserer **E** sind Core-Shell Polymere bevorzugt.

Die hitzehärtende Epoxidharzzusammensetzung kann das feste Core-Shell Polymer **E3** enthalten, insbesondere in einer Menge von 0.1 - 15 Gew.-%, vorzugsweise 1-8 Gew.-%, bezogen auf das Gewicht der Zusammensetzung.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff F sind sowohl die organisch beschichteten als auch die unbeschichteten kommerziell erhältlichen und dem Fachmann bekannten Formen gemeint.
Vorteilhaft beträgt der Gesamtanteil des gesamten Füllstoffs **F** 3 - 50 Gewichts-%, vorzugsweise 5-35 Gewichts-%, insbesondere 5-25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura erhältlich ist. Der Anteil des Treibmittels beträgt vorteilhaft 0.1 - 3 Gew.-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidierte Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-tert.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.5 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe und Pigmente, umfassen.

Es hat sich gezeigt, dass sich die erfindungsgemässen hitzehärtenden Epoxidharzzusammensetzungen besonders als einkomponentige Klebstoffe eignen. Somit betrifft die Erfindung in einem weiteren Aspekt eine Verwendung der vorgängig beschriebenen hitzehärtenden Epoxidharzzusammensetzung als einkomponentigen hitzehärtenden Klebstoff. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 175°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Mit einem Klebstoff basierend auf einer erfindungsgemässen hitzehärtenden Zusammensetzung ist es möglich, die gewünschte Kombination von hoher Crashfestigkeit sowohl hoher als auch tiefer Einsatztemperatur zu erreichen. Zusätzlich hierzu weist die Zusammensetzung hohe mechanische Werte auf. Insbesondere hat sich gezeigt, dass Glasübergangstemperaturen von über 95°C, insbesondere von 100°C oder höher, erreicht werden können, was insbesondere wichtig ist für Anwendungen mit hohen Arbeitstemperaturen.
Ein weiterer Aspekt der Erfindung betrifft somit ein Verfahren zum Verkleben von hitzestabilen Materialien, bei welchem diese Materialien mit einer vorgängig beschriebenen Epoxidharzzusammensetzung kontaktiert werden und welches einen oder mehrere Schritte des Aushärtens bei einer Temperatur von 100 - 220 °C, vorzugsweise 120 - 175°C umfasst. Ein derartiger Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 175°C. Es ist besonders wichtig, dass die Aushärtung bereits auch bei relativ tiefen Temperaturen erfolgen kann, das heisst bei Temperaturen zwischen 120 und 160°C. Dies ist unter energietechnischen und materialtechnischen Aspekten besonders vorteilhaft.

Aus einem derartigen Verfahren zum Verkleben von hitzestabilen Materialien resultiert ein verklebter Artikel, was einen weiteren Aspekt der vorliegenden Erfindung darstellt. Ein derartiger Artikel ist vorzugsweise ein Fahrzeug oder ein Anbauteil eines Fahrzeugs.
Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Es wurde gefunden, dass das endständig blockierte Polyurethanprepolymer der Formel (I) in hervorragender Art und Weise als Schlagzähigkeitsmodifikator, das heisst als Mittel zur Verbesserung der Schlagzähigkeit, insbesondere in Epoxidharzen, verwendet werden kann.

Es lassen sich Zusammensetzungen formulieren, welche typischerweise Bruchenergien, gemessen nach ISO 11343, von mehr als 15.0 J bei 23°C und mehr als 7.0 J bei -30°C aufweisen. Es lassen sich zuweilen Zusammensetzungen formulieren, welche Bruchenergien von mehr als 17.5 J bei 23°C und von mehr als 12.0 J bei -30°C aufweisen. Besonders vorteilhafte Zusammensetzungen weisen gar Bruchenergien von mehr als 18.0 J bei 23°C und von mehr als 12.0 J bei -30°C auf.

Eine besonders bevorzugte Anwendung der erfindungsgemässen hitzehärtenden Epoxidharzzusammensetzung ist die Anwendung als hitzehärtender Rohbauklebstoff im Fahrzeugbau.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle 1. Eingesetzte Rohstoffe.**

| **Verwendete Rohstoffe** | **Lieferant** |
|---|---|
| D.E.R. 330 (Bisphenol-A-diglycidylether = *"DGEBA")* | Dow |
| D.E.R. 671 ("Typ-1" Festharz) (EP-Equivalentgewicht 475-550g/eq) | Dow |
| Albipox XP 23/0277 *("Albipox")* | Nanoresins |
| Polypox R7 (tert-Butylphenyl-glycidylether) | UPPC |
| Dicyandiamid | Degussa |
| Poly-THF 2000 (Difunktionelles Polybutylenglykol) | BASF |
| (OH-Equivalentgewicht = ca. 1000 g/OH-Equivalent) | |
| Poly-THF 1800 (Difunktionelles Polybutylenglykol) | BASF |
| (OH-Equivalentgewicht = ca. 900 g/OH-Equivalent) | |
| Liquiflex H (Hydroxylterminertes Polybutadien) | Krahn |
| (OH-Equivalentgewicht = ca. 1230 g/OH-Equivalent) | |
| Caradol ED56-10 (Difunktionelles Polypropylenglykol) | Shell |
| (OH-Equivalentgewicht = ca. 1000 g/OH-Equivalent) | |
| Isophoron-diisocyanat (=IPDI) | Degussa-Hüls |
| 2-Benzoxazolinon | Sigma-Aldrich |
| ε-Caprolactam | EMS Chemie |
| Cardolite NC-700 (Cardanol, meta-substituiertes Alkenyl-mono-Phenol) | Cardolite |
| 2,2'-Diallyl-bisphenol-A | Sigma-Aldrich |
| F-351™ (Core-Shell Polymer) | Zeon |

### Beispielhafte Herstellung eines monohydroxylhaltigen Epoxides MHE

Trimethylolpropanglycidylether wurde gemäss dem Verfahren in Patent US 5,668,227, Beispiel 1, aus Trimethylolpropan und Epichlorhydrin mit Tetramethylammoniumchlorid und Natronlauge hergestellt. Man erhält ein gelbliches Produkt mit einer Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt. Dieses Produkt wurde als *MHE* eingesetzt.

### Beispiele der Herstellung von endständig blockierten Polyurethanprepolymeren der Formel (I)

### Polyurethanprepolymer PU1-1

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 64.0 g IPDI und 0.13 g Dibutylzinndilaurat zugegeben. Die Reaktion wurde unter Vakuum bei 90°C bis zur Konstanz des NCO-Gehaltes bei 3.30% nach 2.5 h geführt (berechneter NCO-Gehalt: 3.38%).

### Polyurethanprepolymer PU1-2

300 g Poly-THF 2000 (OH-Zahl 57 mg/g KOH) wurden 30 Minuten unter Vakuum bei 105°C getrocknet. Nachdem die Temperatur auf 90°C reduziert worden war, wurden 70.7 g IPDI und 0.13 g Dibutylzinndilaurat zugegeben. Die Reaktion wurde unter Vakuum bei 90°C bis zur Konstanz des NCO-Gehaltes bei 3.50% nach 2.5 h geführt (berechneter NCO-Gehalt: 3.67%).

### Polyurethanprepolymer PU1-3 (vorverlängert)

Zu 370.7g des Polyurethanprepolymer ***PU1-2*** wurden 22.9 g 2,2'-Diallylbisphenol-A als Vorverlängerungsmittel gegeben. Es wurde 3h bei 90°C unter Vakuum bis zur Konstanz des NCO-Gehaltes bei 1.70% (berechneter NCO-Gehalt: 1.87%) gerührt.

### BlockPrep-1

Zu 364.0g des Polyurethanprepolymer ***PU1-1*** wurden 46.4 g 2-Benzoxazolinon als Blockierungsmittel zugegeben. Es wurde bei 105°C unter Vakuum weitergerührt, bis der NCO-Gehalt nach 3.5h unter 0.1 % gesunken war.

### BlockPrep-2

Zu 370.7g des Polyurethanprepolymer ***PU1-2*** wurden 50.1 g 2-Benzoxazolinon als Blockierungsmittel gegeben. Es wurde bei 105°C unter Vakuum weitergerührt, bis der NCO-Gehalt nach 3.5h unter 0.1 % gesunken war.

### BlockPrep-3

Zu 393.6 g des Polyurethanprepolymer ***PU1-3*** wurden 25.8 g 2-Benzoxazolinon als Blockierungsmittel zugegeben. Es wurde bei 105°C unter Vakuum weitergerührt, bis der NCO-Gehalt nach 3.5h unter 0.1 % gesunken war.

### BlockPrep-R1

Zu 364.0g des Polyurethanprepolymer ***PU1-1*** wurden 38.8 g ε-Caprolactam als Blockierungsmittel zugegeben. Es wurde bei 105°C unter Vakuum weitergerührt, bis der NCO-Gehalt nach 3.5h unter 0.1 % gesunken war.

### BlockPre-R2

Zu 364.0g des Polyurethanprepolymer ***PU1-1*** wurden 103.0 g Cardolite NC-700 als Blockierungsmittel zugegeben. Es wurde bei 105°C unter Vakuum weitergerührt, bis der NCO-Gehalt nach 3.5h unter 0.1 % gesunken war.

### BlockPrep-R3

Zu 370.7g des Polyurethanprepolymer ***PU1-2*** wurden 114.3 g 2,2'-Diallylbisphenol-A als Blockierungsmittel gegeben. Es wurde bei 105°C unter Vakuum weitergerührt, bis der NCO-Gehalt nach 3.5h unter 0.1 % gesunken war.

### BlockPrep-R4

Zu 370.7g des Polyurethanprepolymer ***PU1-2*** wurden 41.9 g ε-Caprolactam als Blockierungsmittel gegeben. Es wurde bei 105°C unter Vakuum weitergerührt, bis der NCO-Gehalt nach 3.5h unter 0.1 % gesunken war.

### BlockPrep-R5

Zu 370.7g des Polyurethanprepolymer ***PU1-2*** wurden 111.2 g Cardolite NC-700 als Blockierungsmittel gegeben. Es wurde bei 105°C unter Vakuum weitergerührt, bis der NCO-Gehalt nach 3.5h unter 0.1 % gesunken war.

### Beispiel der Herstellung eines Flüssigkautschuks auf Basis eines Epoxidgruppen-terminierten Polyurethanprepolymers der Formel (II) (EP1)

160 g PolyTHF 1800 (OH-Zahl 62.3 m/g KOH), 110 g Liquiflex H (OH-Zahl 46 mg/g KOH) und 130 g Caradol ED 56-10 (OH-Zahl 56 mg/g KOH) wurden 30 Minuten unter Vakuum bei 105°C getrocknet. Nachdem die Temperatur auf 90°C reduziert worden war, wurden 92.5 g IPDI und 0.08 g Dibutylzinndilaurat zugegeben. Die Reaktion wurde unter Vakuum bei 90°C bis zur Konstanz des NCO-Gehaltes bei 3.60% nach 2.5 h geführt (berechneter NCO-Gehalt: 3.62%). Anschliessend wurden zu diesem Polyurethanprepolymer 257.8 g des oben beschriebenen ***MHE*** zugegeben und die Reaktion wurde bei 90°C unter Vakuum weitergeführt, bis kein NCO-Gehalt mehr messbar war.

### Herstellung der Zusammensetzungen

Es wurden gemäss Tabelle 2 die Referenzzusammensetzungen ***Ref.1 - Ref. 11*** sowie die erfindungsgemässen Zusammensetzungen **1, 2 , 3 , 4 , 5, 6** und 7 hergestellt.
Die Menge an Dicyandiamid wurde jeweils angepasst an die Epoxidgruppen-Konzentration.

### Prüfmethoden:

### Zugscherfestigkeit (ZSF) (DIN EN 1465)

Die Probekörper wurden aus den beschriebenen Zusammensetzungen und mit elektrolytisch verzinktem DC04 Stahl (eloZn) mit dem Mass 100 x 25 x 1.5 mm hergestellt, dabei betrug die Klebfläche 25 x 10 mm bei einer Schichtdicke von 0.3 mm. Gehärtet wurde 30 Min. bei 175°C. Die Zuggeschwindigkeit betrug 10 mm/min.

### Zugfestigkeit (ZF) (DIN EN ISO 527)

Eine Klebstoffprobe wurde zwischen zwei Teflonpapieren auf eine Schichtdicke von 2mm verpresst. Anschliessend wurde der Klebstoff während 30 Minuten bei 175°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen.
Die Zugfestigkeit wurde gemäss DIN EN ISO 527 bestimmt.

### Schlagschälarbeit (ISO 11343)

Die Probekörper wurden aus den beschriebenen Zusammensetzungen und mit elektrolytisch verzinktem DC04 Stahl (eloZn) mit dem Mass 90 x 20 x 0.8 mm hergestellt, dabei betrug die Klebfläche 20 x 30 mm bei einer Schichtdicke von 0.3 mm. Gehärtet wurde 30 Min. bei 175°C. Die Messung der Schlagschälarbeit erfolgte jeweils bei Raumtemperatur und bei minus 30°C. Die Schlaggeschwindigkeit betrug 2 m/s. Als Bruchenergie (BE) in Joule wird die Fläche unter der Messkurve (von 25% bis 90%, gemäss ISO 11343) angegeben.

### Glasübergangstemperatur (T_{g})

Die Glasübergangstemperatur wurde mittels DSC bestimmt. Es wurde hierfür ein Gerät Mettler DSC822^{e} verwendet. 20 - 30 mg Klebstoffmuster wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 20°C/min bis 150°C aufgeheizt. Die Glasübergangstemperatur wurde mit Hilfe der DSC-Software aus der gemessenen DSC-Kurve bestimmt.

Die Ergebnisse dieser Prüfungen sind in Tabelle 2 zusammengestellt.

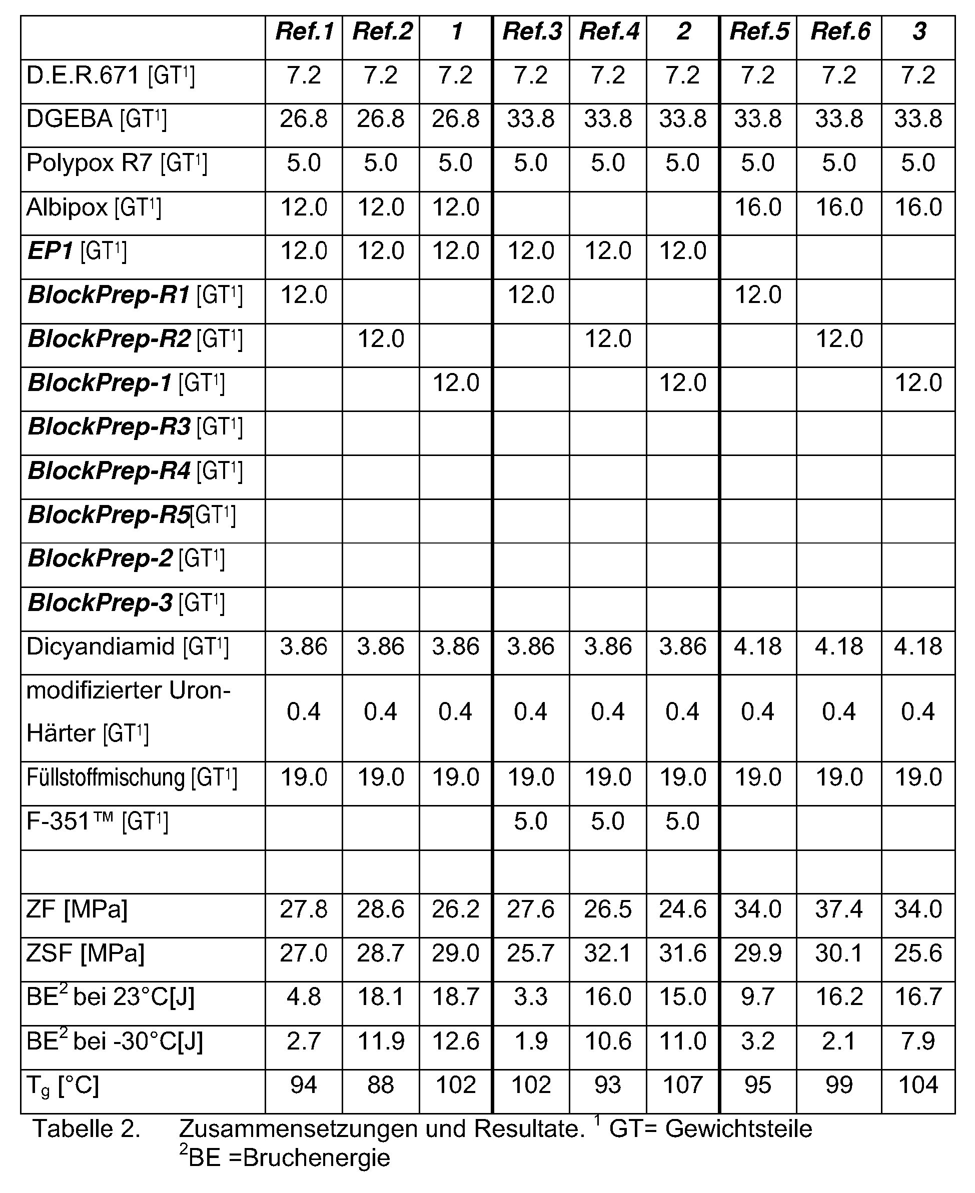

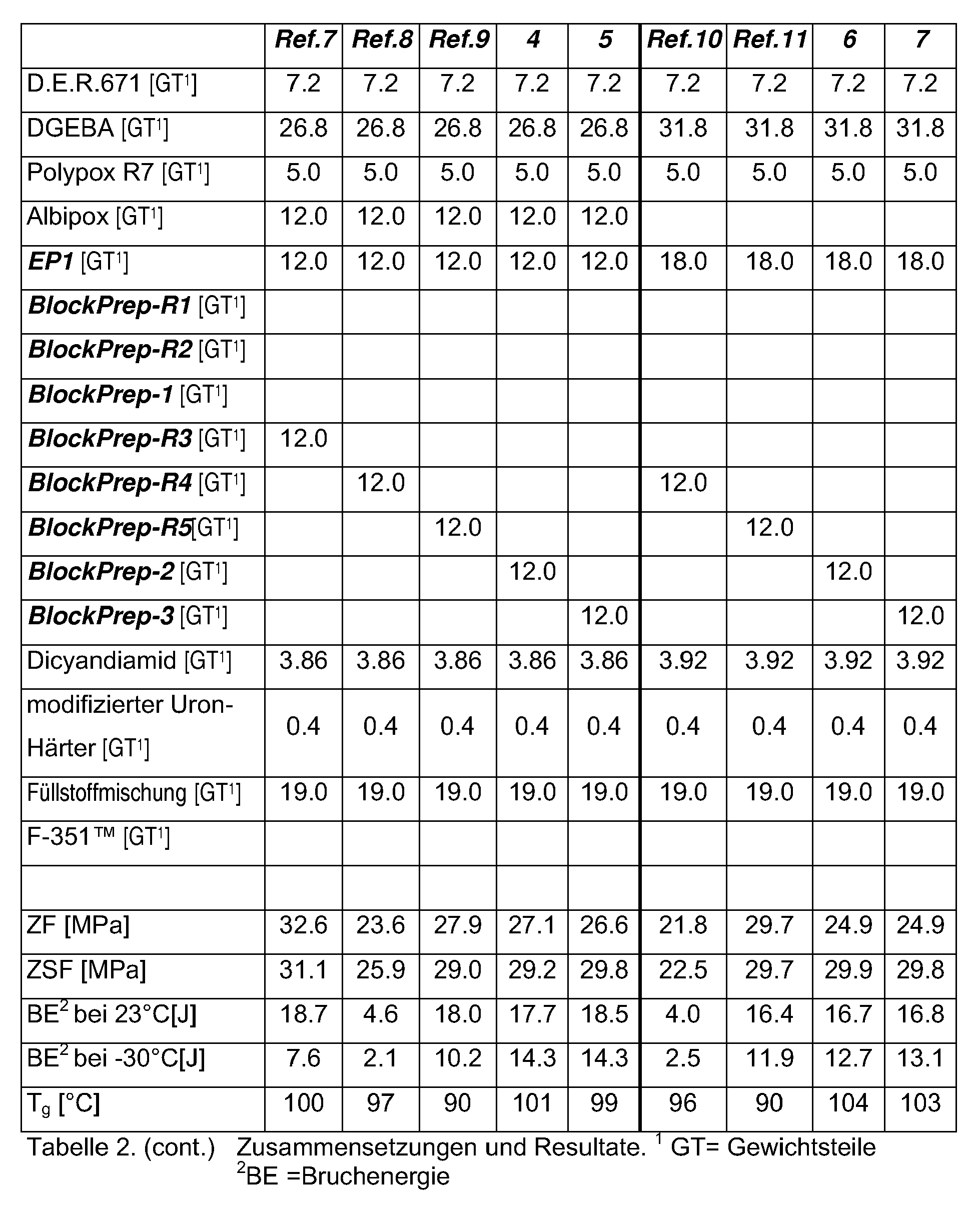

## Patentansprüche

1. Hitzehärtende Epoxidharzzusammensetzung enthaltend
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird.
- mindestens ein endständig blockiertes Polyurethanprepolymer der Formel (I) 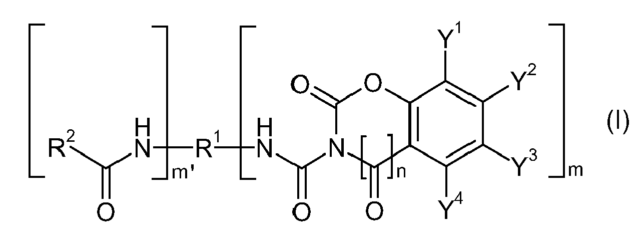
wobei R¹ für ein mit m + m' Isocyanatgruppen terminiertes linearen oder verzweigtes Polyurethanprepolymer **PU1** nach dem Entfernen aller endständigen Isocyanatgruppen steht;
Y¹, Y², Y³ und Y⁴ unabhängig voneinander für H, Halogen, NO₂ Alkyl oder Alkoxy stehen;
und wobei R² unabhängig voneinander für einen Substituenten steht, welcher ausgewählt ist aus der Gruppe bestehend aus 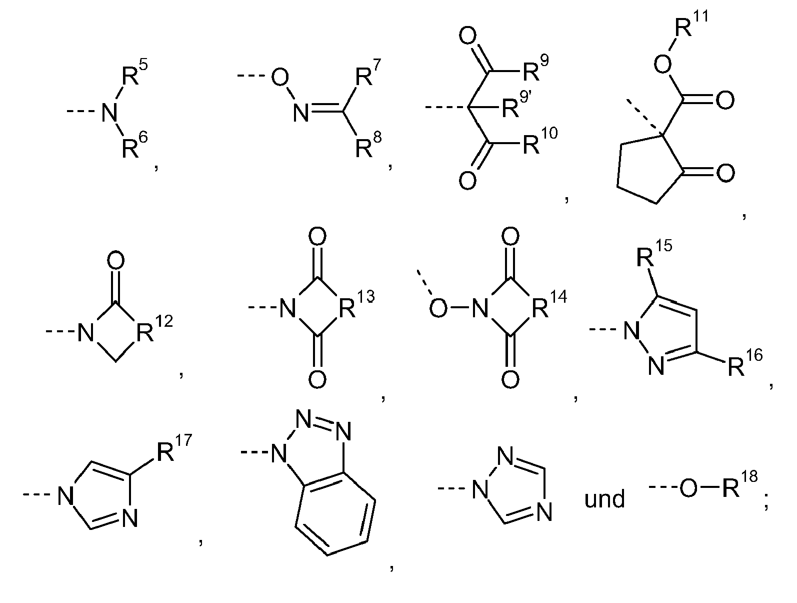 wobei
R⁵, R⁶, R⁷ und R⁸ je unabhängig voneinander für eine Alkyl- oder Cycloalkyl- oder Aryl- oder Aralkyl- oder Arylalkyl-Gruppe steht
oder R⁵ zusammen mit R⁶, oder R⁷ zusammen mit R⁸, einen Teil eines 4- bis 7-gliedrigen Rings bilden, welcher allenfalls substituiert ist;
R⁹, R⁹' und R¹⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist; oder für einen Rest der Formel 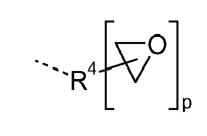 steht,
wobei R⁴ unabhängig voneinander für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht und p für einen Wert von 1, 2 oder 3 steht;
und wobei n für 0 oder 1 steht;
m für einen Wert von 1 bis 8 und m' für einen Wert von 0 bis 7 stehen, mit der Massgabe, dass m + m' für einen Wert von 2 bis 8 steht.

2. Hitzehärtende Epoxidharzzusammensetzung gemäss Anspruch 1, **dadurch gekennzeichnet, dass** Y¹ = Y² = Y³ = Y⁴ = H ist.

3. Hitzehärtende Epoxidharzzusammensetzung gemäss Anspruch 1 oder 2, **dadurch gekennzeichnet, dass** n = 0 ist.

4. Hitzehärtende Epoxidharzzusammensetzung gemäss einem der vorhergehenden Ansprüche, **dadurch gekennzeichnet, dass** m' = 0 ist.

5. Hitzehärtende Epoxidharzzusammensetzung gemäss einem der vorhergehenden Ansprüche, **dadurch gekennzeichnet, dass** R² für einen Substituenten der Formel
--- O-R¹⁸ steht.

6. Hitzehärtende Epoxidharzzusammensetzung gemäss Anspruch 5, **dadurch gekennzeichnet, dass** R² ausgewählt ist aus der Gruppe bestehend aus 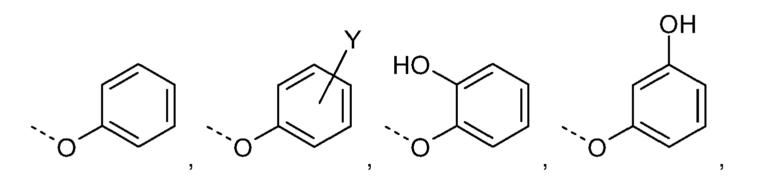 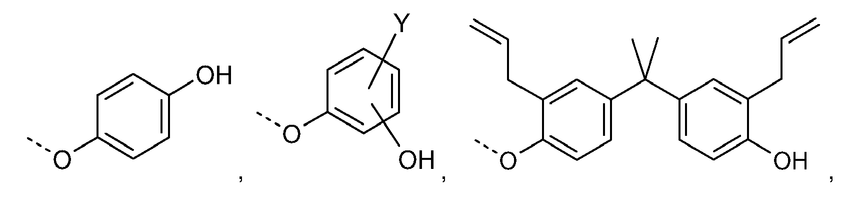 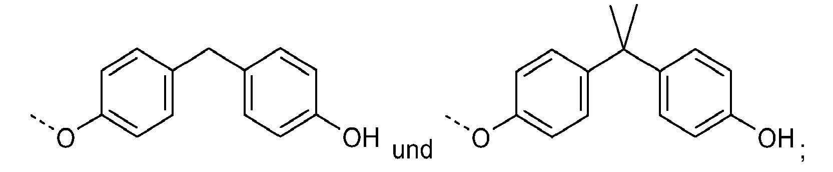 wobei Y für einen gesättigten oder olefinisch ungesättigten Kohlenwasserstoffrest mit 1 bis 20 C-Atomen, insbesondere mit 1 bis 15 C-Atomen, steht.

7. Hitzehärtende Epoxidharzzusammensetzung gemäss Anspruch 5, **dadurch gekennzeichnet, dass** R² für einen Substituenten der Formel 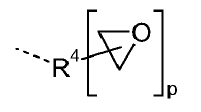 steht, wobei R⁴ vorzugsweise ein dreiwertiger Rest der Formel 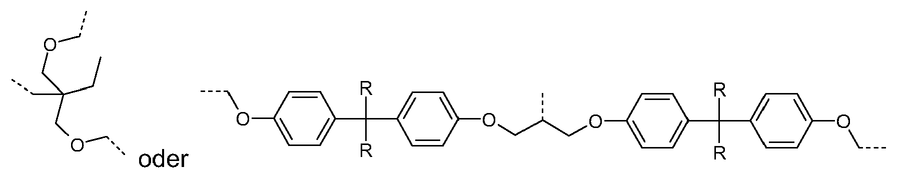 ist, wobei R für Methyl oder H steht.

8. Hitzehärtende Epoxidharzzusammensetzung gemäss einem der vorhergehenden Ansprüche, **dadurch gekennzeichnet, dass** das Polyurethanprepolymer **PU1** hergestellt wird aus mindestens einem Diisocyanat oder Triisocyanat sowie
aus einem Polymeren **Q_{PM}** mit endständigen Amino-, Thiol- oder Hydroxylgruppen;
und/oder
aus einem, gegebenenfalls substituierten, Polyphenol **Q_{PP}.**

9. Hitzehärtende Epoxidharzzusammensetzung gemäss Anspruch 8, **dadurch gekennzeichnet, dass** das Polymer **Q_{PM}** 2 oder 3 endständige Amino-, Thiol- oder Hydroxylgruppen aufweist.

10. Hitzehärtende Epoxidharzzusammensetzung gemäss Anspruch 8 oder 9, **dadurch gekennzeichnet, dass** das Polymer **Q_{PM}** ein α,ω-Dihydroxypolyalkylenglykol mit C₂-C₆-Alkylengruppen oder mit gemischten C₂-C₆- Alkylengruppen ist, welches mit Amino-, Thiol- oder, bevorzugt, Hydroxylgruppen terminiert ist.

11. Hitzehärtende Epoxidharzzusammensetzung gemäss Anspruch 8 oder 9, **dadurch gekennzeichnet, dass** das Polymer **Q_{PM}** ein Hydroxyl-Gruppen aufweisendes Polybutadien oder Polyisopren oder ein partiell oder vollständig hydriertes Reaktionsprodukt davon ist.

12. Hitzehärtende Epoxidharzzusammensetzung gemäss einem der Ansprüche 8 bis 11, **dadurch gekennzeichnet, dass** das Polymer **Q_{PM}** ein OH-Equivalenzgewicht von 300 - 6'000 g/OH-Equivalent, insbesondere von 700 - 2200 g/OH-Equivalent aufweist.

13. Hitzehärtende Epoxidharzzusammensetzung gemäss einem der Ansprüche 8 bis 12, **dadurch gekennzeichnet, dass** das Polyphenol **Q_{PP}** 2 oder 3 phenolische Gruppen aufweist.

14. Hitzehärtende Epoxidharzzusammensetzung gemäss einem der Ansprüche 8 bis 13, **dadurch gekennzeichnet, dass** das für die Herstellung des Polyurethanprepolymers **PU1** eingesetzte Diisocyanat oder Triisocyanat ein Diisocyanat, bevorzugt HDI, IPDI, MDI oder TDI, ist.

15. Hitzehärtende Epoxidharzzusammensetzung gemäss einem der vorhergehenden Ansprüche, **dadurch gekennzeichnet, dass** das endständig blockierte Polyurethanprepolymer der Formel (I) die Formel (1') aufweist.

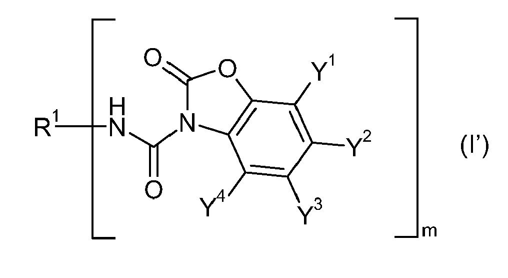

16. Hitzehärtende Epoxidharzzusammensetzung gemäss einem der vorhergehenden Ansprüche, **dadurch gekennzeichnet, dass** der Härter B ein Härter ist, welcher ausgewählt ist aus der Gruppe bestehend aus Dicyandiamid, Guanamine, Guanidine, Aminoguanidine und deren Derivate; substituierte Harnstoffe, insbesondere 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

17. Hitzehärtende Epoxidharzzusammensetzung gemäss einem der vorhergehenden Ansprüche, **dadurch gekennzeichnet, dass** die Zusammensetzung weiterhin mindestens ein Thixotropiermittel C, auf Basis von Harnstoffderivat in einem Trägermaterial, insbesondere in einer Menge von 0 - 40 Gew.-%, bezogen auf das Gewicht der Zusammensetzung, enthält.

18. Hitzehärtende Epoxidharzzusammensetzung gemäss einem der vorhergehenden Ansprüche, **dadurch gekennzeichnet, dass** die Zusammensetzung weiterhin mindestens einen Flüssigkautschuk D, welcher ein Carboxyl- oder Epoxid-terminiertes Polymer, insbesondere ein Carboxyl-oder Epoxid-terminiertes Acrylnitril/Butadien-Copolymer, ist, insbesondere in einer Menge von 1-45 Gew.-%, bezogen auf das Gewicht der Zusammensetzung, enthält.

19. Hitzehärtende Epoxidharzzusammensetzung gemäss Anspruch 18, **dadurch gekennzeichnet, dass** der Flüssigkautschuk **D** die Formel (II) aufweist 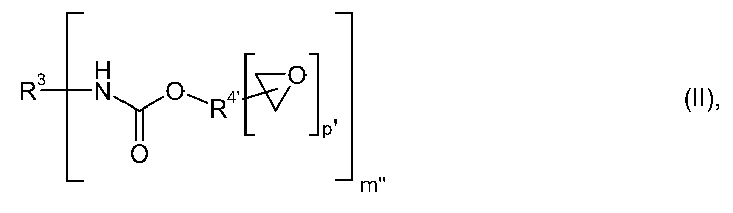 wobei R³ für ein mit m" Isocyanatgruppen terminiertes lineares oder verzweigtes Polyurethanprepolymer PU1' nach dem Entfernen aller endständigen Isocyanatgruppen steht,
R^{4,} für einen Rest eines eine primäre oder sekundäre Hydroxylgruppe enthaltenden aliphatischen, cycloaliphatischen, aromatischen oder araliphatischen Epoxids nach dem Entfernen der Hydroxyl- und Epoxidgruppen, steht, p' für die Werte 1, 2 oder 3 und m" für einen Wert von 2
bis 8 steht.

20. Hitzehärtende Epoxidharzzusammensetzung gemäss Anspruch 19, **dadurch gekennzeichnet, dass** die hitzehärtende Epoxidharzzusammensetzung mindestens einen epoxidfunktionellen Flüssigkautschuk auf Basis eines Acrylnitril/Butadien-Copolymers und mindestens einen epoxidfunktionellen Flüssigkautschuk der Formel (II) enthält.

21. Hitzehärtende Epoxidharzzusammensetzung gemäss einem der vorhergehenden Ansprüche, **dadurch gekennzeichnet, dass** die Zusammensetzung weiterhin einen festen Zähigkeitsverbesserer E, insbesondere in einer Menge von 0.1-15 Gew.-%, insbesondere von 0.5 - 8 Gew.-%, bezogen auf das Gewicht der Zusammensetzung, enthält.

22. Hitzehärtende Epoxidharzzusammensetzung gemäss Anspruch 21, **dadurch gekennzeichnet, dass** der feste Zähigkeitsmodifikator E ein Core-Shell Polymer ist.

23. Hitzehärtende Epoxidharzzusammensetzung gemäss einem der vorhergehenden Ansprüche, **dadurch gekennzeichnet, dass** die Zusammensetzung weiterhin mindestens einen Füllstoff F, insbesondere in einer Menge von 3 - 50 Gew.-%, bezogen auf das Gewicht der Zusammensetzung, enthält.

24. Hitzehärtende Epoxidharzzusammensetzung gemäss einem der vorhergehenden Ansprüche, **dadurch gekennzeichnet, dass** die Zusammensetzung mindestens ein Treibmittel, insbesondere in einer Menge von 0.1 - 3 Gew.-%, bezogen auf das Gewicht der Zusammensetzung, enthält.

25. Hitzehärtende Epoxidharzzusammensetzung gemäss einem der vorhergehenden Ansprüche, **dadurch gekennzeichnet, dass** die Zusammensetzung weiterhin einen Epoxidgruppen-tragenden Reaktivverdünner G, insbesondere in einer Menge von 0.5- 20 Gew.-%, bezogen auf das Gewicht der Zusammensetzung, enthält.

26. Hitzehärtende Epoxidharzzusammensetzung gemäss einem der vorhergehenden Ansprüche, **dadurch gekennzeichnet, dass** der Anteil des Epoxidharzes **A** 10 - 85 Gew.-%, insbesondere 15-70 Gew.-%, bevorzugt 15-60 Gew.-%, am Gewicht der Zusammensetzung beträgt.

27. Hitzehärtende Epoxidharzzusammensetzung gemäss einem der vorhergehenden Ansprüche, **dadurch gekennzeichnet, dass** der Anteil des endständig blockierten Polyurethanprepolymers der Formel (1) 1 - 45 Gew.-%, insbesondere 3-35 Gew.-%, am Gewicht der Zusammensetzung beträgt.

28. Verwendung des endständig blockierten Polyurethanprepolymer der Formel (I), insbesondere der Formel (I'), wie es in der hitzehärtende Epoxidharzzusammensetzung gemäss einem der Ansprüche 1 bis 27 beschrieben ist, als Mittel zur Verbesserung der Schlagzähigkeit, insbesondere von Epoxidharzzusammensetzungen.

29. Verwendung einer hitzehärtenden Epoxidharzzusammensetzung gemäss einem der Ansprüche 1 bis 27 als einkomponentigen hitzehärtenden Klebstoff, insbesondere als hitzehärtenden Rohbauklebstoff im Fahrzeugbau.

30. Verfahren zum Verkleben von hitzestabilen Materialien, insbesondere von Metallen, **dadurch gekennzeichnet, dass** diese Materialien mit einer hitzehärtenden Epoxidharzzusammensetzung gemäss einem der Ansprüche 1 bis 27 kontaktiert werden und einen oder mehrere Schritte des Aushärtens bei einer Temperatur von 100 - 220 °C, vorzugsweise 120 - 175°C, umfasst.

31. Verfahren zum Verkleben gemäss Anspruch 30, **dadurch gekennzeichnet, dass** die Materialien mit einer hitzehärtenden Epoxidharzzusammensetzung gemäss einem der Ansprüche 1 bis 23 kontaktiert werden und dass nach der Verklebung die verklebten Materialien bei Temperaturen zwischen 120°C und -40°C, vorzugsweise zwischen 100°C und -40°C, insbesondere zwischen 80°C und -40°C eingesetzt werden.

32. Verklebter Artikel, welcher durch ein Verfahren gemäss Anspruch 30 oder 31 erhalten wird.

33. Verklebter Artikel gemäss Anspruch 32, **dadurch gekennzeichnet, dass** der Artikel ein Fahrzeug oder ein Anbauteil eines Fahrzeugs ist.
